# EUROPÄISCHE PATENTSCHRIFT

(11) **EP 2 685 469 B1**
(45) Veröffentlichungstag und Bekanntmachung des Hinweises auf die Patenterteilung: **03.05.2017**
(21) Anmeldenummer: 12305829.9
(22) Anmeldetag: 11.07.2012
(51) Int. Cl.: H01B 12/14, H01B 12/16, H02G 15/34

(54) **Anordnung mit mindestens einem supraleitfähigen Kabel**
Assembly with at least one superconducting cable
Agencement doté d'au moins un câble supraconducteur

(43) Veröffentlichungstag der Anmeldung: 15.01.2014
(73) Patentinhaber: Nexans, 75008 Paris (FR)
(72) Erfinder: Dr. Marzahn, Erik, 30853 Langenhagen (DE); Bruzek, Christian-Eric, 59141 Thun St Martin (FR)
(74) Vertreter: Döring, Roger

(56) Entgegenhaltungen:
- DE-A1- 1 948 520
- DE-A1- 2 116 651
- GB-A- 1 211 183
- JP-A- 2002 352 645
- US-A1- 2006 240 991

## Beschreibung

Die Erfindung bezieht sich auf eine Anordnung gemäß dem Oberbegriff des Patentanspruchs 1.

Eine solche Anordnung geht beispielsweise aus der DE 19 48 520 A1 hervor.

Ein supraleitfähiges Kabel hat elektrische Leiter aus einem Material, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke, die kritische Stromstärke, nicht überschritten wird. Geeignete Materialien sind beispielsweise oxidische Materialien auf Basis seltener Erden (ReBCO), insbesondere YBCO (Yttrium-Barium-Kupfer-Oxid), oder BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe. Da die angegebenen Temperaturen deutlich oberhalb des absoluten Nullpunkts von - 273,16 °C = 0 K liegen, werden Leiter aus entsprechenden Materialien als HochTemperatur-Supraleiter (HTS-Leiter) bezeichnet. Das gilt auch für andere supraleitfähige Materialien, wie beispielsweise Magnesiumdiborid, die bei Temperaturen von etwa 39 K oder niedriger, die ebenfalls deutlich über 0 K liegen, in den supraleitfähigen Zustand übergehen.

Aus der EP 2 234 122 B1 geht eine Anordnung hervor, bei welcher ein supraleitfähiges Kabel in einem Kryostat angeordnet ist. Der Kryostat besteht aus zwei konzentrisch und mit Abstand zueinander angeordneten Rohren aus Metall, die eine als Vakuumisolierung ausgeführte thermische Isolierung zwischen sich einschließen. Als supraleitfähige Materialien sind die bereits erwähnten oxidischen Materialien auf Basis seltener Erden eingesetzt. Für die Kühlung des Kabels wird beispielsweise flüssiger Stickstoff verwendet, der mit einem üblichen, vakuumisolierten Kryostat über einen größeren Zeitraum bei einer ausreichend niedrigen Kühltemperatur gehalten werden kann. Für niedrigere Temperaturen, die unterhalb von 63 K liegen, kann flüssiger Stickstoff nicht eingesetzt werden, weil er bei diesen Temperaturen in einen festen Zustand übergeht. Außerdem muß für ein auf entsprechend niedriger Temperatur befindliches Kühlmittel ein erhöhter Aufwand getrieben werden, um dasselbe auch über einen größeren Zeitraum ausreichend kühl zu halten.

In der JP 2002352645 A ist ein System mit einem supraleitfähigen Kabel beschrieben, bei dem als supraleitfähiges Material Magnesiumdiborid eingesetzt ist. Das Kabel ist von einem aus zwei konzentrisch zueinander angeordneten Rohren bestehenden Kryostat umgeben, zwischen denen eine Isolierung angebracht ist. Der Raum zwischen den beiden Rohren ist außerdem evakuiert. Das äußere Rohr ist von einer elektrischen Isolierung umgeben, über welcher als mechanischer Schutz zwei Lagen von Stahlbändern aufgewickelt sind.

Die eingangs erwähnte DE 19 48 520 A1 beschreibt eine Anordnung mit einer Rohrleitung für tiefgekühlte Kabel mit zwei konzentrisch zueinander angeordneten Kryostaten, die beide aus zwei konzentrischen, ein Vakuum zwischen sich einschließenden Rohren bestehen. Durch die beiden Kryostate werden Kühlmittel mit unterschiedlichen Temperaturen geleitet, und zwar beispielsweise flüssiges Helium durch den inneren Kryostat und beispielsweise flüssiger Stickstoff durch den äußeren Kryostat. Für das beispielsweise als supraleitfähiges Kabel ausgeführte Kabel geeignete Materialien sind beispielsweise Legierungen aus Niob und Titan bzw. Niob und Zirkon sowie eine Niob-Zinn-Verbindung erwähnt.

Der Erfindung liegt die Aufgabe zugrunde, die eingangs geschilderte Anordnung so zu gestalten, daß sie auf einfache Art und Weise auch für Kabel mit supraleitfähigen Materialien einsetzbar ist, die zur Erreichung des supraleitfähigen Zustands auf eine Temperatur von 39 K oder weniger abgekühlt werden müssen, bei gleichzeitiger Verbesserung der elektrischen Eigenschaften des Kabels.

Diese Aufgabe wird entsprechend den kennzeichnenden Merkmalen des Patentanspruchs 1 gelöst.

Bei dieser Anordnung kann das gegenüber den oxidischen supraleitfähigen Materialien preiswertere Magnesiumdiborid als supraleitfähiges Material eingesetzt werden. Dieses Material hat außerdem eine gegenüber den oxidischen Materialien erhöhte Stromtragfähigkeit. Die Anordnung ist insgesamt relativ einfach aufgebaut, weil der zweite Kryostat in seinem Aufbau dem ersten Kryostat entspricht und in gleichbleibender Technik um den ersten Kryostat herumgeformt werden kann. Der zweite Kryostat bedeutet bereits selbst für das im ersten Kryostat geführte Kühlmittel einen erhöhten Schutz gegen Wärmeeinfall von außen. Diese Schutzwirkung des zweiten Kryostats wird durch das verflüssigte Gas wesentlich erhöht, das während des Betriebs der Anordnung durch denselben geleitet wird. Der zweite Kryostat hat dadurch insgesamt die Wirkung eines Hitzeschildes für den ersten Kryostat, so daß das darin geführte Kühlmittel auf einer relativ langen Strecke, entlang der die Anordnung verlegt ist, bei einer ausreichend niedrigen Kühltemperatur gehalten werden kann. Die in dem zweiten Kryostat angebrachte hochspannungsfeste Isolierung, die das äußere Rohr des ersten Kryostats rundum umschließt und auf demselben aufliegt, erhält durch das verflüssigte Gas, welches die Isolierung umspült und durch welches dieselbe durchtränkt wird, wesentlich verbesserte dielektrische Werte.

Ein Ausführungsbeispiel des Erfindungsgegenstandes ist in den Zeichnungen dargestellt.

Es zeigen:
Fig. 1 schematisch eine Übertragungsstrecke für elektrische Energie mit einer Anordnung nach der Erfindung.
Fig. 2 einen Querschnitt der Anordnung nach der Erfindung in vergrößerter Darstellung.

Als erstes Kühlmittel sind beispielsweise flüssiger Wasserstoff mit einer Kühltemperatur von etwa 20,28 K, flüssiges Neon mit einer Kühltemperatur von etwa 27,07 K und Heliumgas mit einer Kühltemperatur von 39 K oder tiefer geeignet. Im folgenden wird stellvertretend für alle geeigneten Kühlmittel Heliumgas als erstes Kühlmittel berücksichtigt.

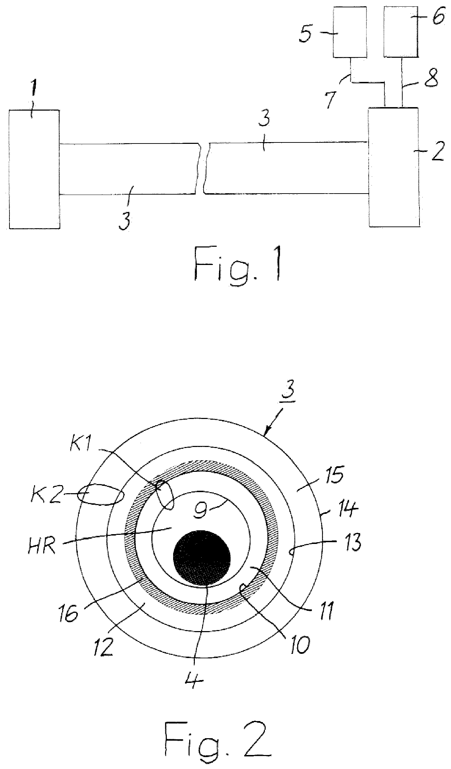

Die Übertragungsstrecke nach Fig. 1 weist zwei Endenabschlüsse 1 und 2 auf, zwischen denen eine Anordnung 3 mit mindestens einem supraleitfähigen Kabel 4 (Fig. 2) angebracht ist. Die Übertragungsstrecke kann eine Länge von beispielsweise 600 m haben. In ihrem Verlauf kann auch mindestens eine Verbindungsstelle zum Verbinden von jeweils zwei Anordnungen 3 angebracht sein. In den Endenabschlüssen 1 und 2 ist das supraleitfähige Kabel 4 in bekannter Technik an elektrische Elemente angeschlossen. Der Endenabschluß 2 ist im dargestellten Ausführungsbeispiel mit zwei Vorratsbehältern 5 und 6 verbunden, welche jeweils ein Kühlmittel enthalten. Im Vorratsbehälter 5 befindet sich mit Vorteil Heliumgas, während der Vorratsbehälter 6 mit Vorteil flüssigen Stickstoff als zweites Kühlmittel enthält. Die Kühlmittel werden über Rohrleitungen 7 und 8 in den Endenabschluß 2 geleitet und in bekannter Technik mittels Pumpen unter Druck in zwei Kryostate K1 und K2 (Fig. 2) geleitet, welche das Kabel 4 umgeben.

Vorratsbehälter für Kühlmittel können auch am Endenabschluß 1 und gegebenenfalls an einer Verbindungsstelle vorhanden sein. Zur Einhaltung bzw. Aufrechterhaltung der niedrigen Temperatur für das Heliumgas wird zweckmäßig eine geeignete Kühlanlage verwendet und das Heliumgas wird mit Vorteil in einem Kreislauf durch die Anordnung bewegt.

In der Anordnung nach Fig. 2 ist schematisch ein supraleitfähiges Kabel 4 dargestellt, dessen Aufbau grundsätzlich beliebig und in vielfältiger Ausführung bekannt ist. Als supraleitfähiges Material ist im Kabel 4 für dessen Leiter und gegebenenfalls auch für einen Schirm Magnesiumdiborid eingesetzt. Das Kabel 4 kann zur Übertragung von elektrischer Energie im Mittelspannungsbereich (etwa ab 1 kV) und im Hochspannungsbereich (etwa ab 80 kV) dienen.

Das Kabel 4 ist von einem ersten Kryostat K1 umgeben, der aus zwei konzentrisch und mit Abstand zueinander angeordneten Rohren 9 und 10 aus Metall besteht. Es können auch zwei oder mehr supraleitfähige Kabel in dem Kryostat K1 angeordnet sein. Zwischen den beiden Rohren 9 und 10 des ersten Kryostats K1 ist neben einer Abstandshalterung als thermische Isolierung eine Vakuumisolierung 11 angebracht. Die Rohre 9 und 10 bestehen mit Vorteil aus Edelstahl. Sie können quer zu ihrer Längsrichtung gewellt sein. Der erste Kryostat K1 umschließt einen Hohlraum HR, in welchem das Kabel 4 angeordnet ist und durch welchen während des Betriebes der Anordnung aus dem Vorratsbehälter 5 heraus Heliumgas gepumpt wird. Beim Betrieb der Anordnung wird das supraleitfähige Material, das Magnesiumdiborid, auf eine Temperatur von 39 K oder weniger abgekühlt.

Unter Einhaltung eines konzentrischen Zwischenraums 12 ist um den ersten Kryostat K1 ein zweiter Kryostat K2 herum angeordnet, der ähnlich bzw. identisch aufgebaut ist, wie der erste Kryostat K1. Der zweite Kryostat K2 besteht aus zwei konzentrisch und mit Abstand zueinander angeordneten Rohren 13 und 14 aus Metall, die eine Vakuumisolierung 15 zwischen sich einschließen. Zwischen den Rohren 10 und 13 sowie zwischen den Rohren 13 und 14 befindet sich eine Abstandshalterung.

Durch den zweiten Kryostat K2, also durch den Zwischenraum 12, wird während des Betriebes der Anordnung aus dem Vorratsbehälter 6 beispielsweise flüssiger Stickstoff als zweites Kühlmittel gepumpt. Der Zwischenraum wird dadurch beispielsweise auf etwa 67 K bis 77 K abgekühlt. Als zweites Kühlmittel könnten auch LNG, das auf mindestens 112 K abgekühlt ist oder flüssiger Sauerstoff verwendet werden, der auf eine Temperatur von mindestens 90 K abgekühlt ist. Das zweite Kühlmittel, vorzugsweise der flüssige Stickstoff, der im folgenden berücksichtigt wird, stellt zusammen mit dem zweiten Kryostat K2 einen wirksamen Hitzeschild für den ersten Kryostat K1 dar, so daß das durch denselben geleitete Heliumgas vor einer zu schnellen Erwärmung durch von außen einfallende Wärme geschützt ist.

Die hochspannungsfeste Isolierung 16 bzw. das Dielektrikum des Kabels 4 ist im Zwischenraum 12 angebracht, und zwar als eine den ersten Kryostat K1 vollständig umschließende Lage aus einem hochspannungsfesten Isoliermaterial, die auf dem äußeren Rohr 10 des ersten Kryostats K1 aufliegt. Als Isoliermaterial für die Isolierung 16 können beispielsweise Papier oder mit Kunststoff beschichtetes Papier eingesetzt werden. Die Isolierung 16 wird im Zwischenraum 12 vom flüssigen Stickstoff umspült und auch von demselben durchtränkt, wodurch sich eine erhöhte dielektrische Festigkeit der Isolierung ergibt. Alle von der Isolierung 16 umgebenen Elemente aus Metall befinden sich auf einem Potential mit erhöhter Spannung, mit Vorteil auf Hochspannungspotential. Wenn ein Kabel mit einem supraleitfähigen Schirm eingesetzt wird, dann wird der Schirm über der Isolierung 16 im Zwischenraum 12 angeordnet. Für den Schirm werden mit Vorteil oxidische supraleitfähige Materialien verwendet.

## Patentansprüche

1. Anordnung mit mindestens einem supraleitfähigen Kabel (4) und einem dasselbe umgebenden, ersten Kryostat (K1) zur Durchleitung eines ersten Kühlmittels, welcher aus zwei koaxial und mit Abstand zueinander angeordneten, eine thermische Isolierung (11) zwischen sich einschließenden Rohren (9, 10) aus Metall besteht, und welcher auf seiner ganzen Länge einen Hohlraum (HR) umschließt, in dem das Kabel (4) angeordnet ist und durch welchen beim Betrieb der Anordnung das erste Kühlmittel geleitet wird, bei welchem als erstes Kühlmittel ein auf eine Temperatur von 39 K oder weniger abgekühltes, flüssiges oder gasförmiges Kühlmittel verwendet ist und bei welchem um den ersten Kryostat (K1) koaxial und mit Abstand zu demselben ein zweiter Kryostat (K2) zum Durchleiten eines zweiten Kühlmittels herumgeformt ist, der ebenfalls aus zwei koaxial und mit Abstand zueinander angeordneten, eine thermische Isolierung (15) zwischen sich einschließenden Rohren (13,14) aus Metall besteht und durch welchen während des Betriebes der Anordnung ein verflüssigtes Gas mit einer Temperatur von 112 K oder weniger geleitet wird, **dadurch gekennzeichnet,**
- **daß** als supraleitfähiges Material Magnesiumdiborid eingesetzt ist und
- **daß** in dem Zwischenraum (12) zwischen dem ersten Kryostat (K1) und dem zweiten Kryostat (K2) eine hochspannungsfeste Isolierung (16) angeordnet ist, die das äußere Rohr (10) des ersten Kryostats (K1) rundum umschließt und auf demselben aufliegt und die während des Betriebes der Anordnung von dem durch den Zwischenraum (12) geleiteten verflüssigten Gas umspült und von demselben durchtränkt ist.

2. Anordnung nach Anspruch 1, **dadurch gekennzeichnet, daß** als erstes Kühlmittel Heliumgas verwendet ist.

## Claims

1. Arrangement with at least one superconductive cable (4) and a first cryostat (K1) surrounding the same for conducting a first cooling agent therethrough, wherein the first cryostat (K1) consists of two tubes (9,10) of metal which are arranged coaxially to each other and at a distance from each other with a thermal insulation (11) therebetween, and wherein the first cryostat (K1) encloses a hollow space (HR) over its entire length in which the cable (4) is arranged and through which, during operation of the arrangement, the first cooling agent is conducted, wherein, as the first cooling agent a fluid and gaseous coolant is used which is cooled to a temperature of 39 K or lower, and wherein a second cryostat (K2) is mounted around the first cryostat (K1) coaxially and at a distance to the same for conducting a second cooling agent, which also consists of two tubes (13,14) of metal with a thermal insulation (15) therebetween and wherein a liquefied gas having a temperature of 112 K or lower is conducted through the second cryostat (K2), **characterized in**
- **that** magnesium diboride is used as superconductive material and
- **that** a high voltage insulation (16) is arranged in the intermediate space (12) between the first cryostat (K1) and the second cryostat (K2) which completely surrounds the outer tube (10) of the first cryostat (K1) and abuts to the same, and around which during operation of the arrangement liquefied gas which flows through the intermediate space (12) is flowing around and impregnating the insulation (16).

2. Arrangement according to claim 1, **characterized in that** Helium gas is used as first cooling agent.

## Revendications

1. Arrangement comprenant au moins un câble supraconducteur et un premier cryostat qui entoure celui-ci, destiné à l'acheminement d'un premier fluide réfrigérant, lequel se compose de deux tubes en métal disposés de manière coaxiale et espacés l'un de l'autre qui englobent une isolation thermique entre eux, et qui enveloppe sur toute sa longueur un espace creux dans lequel est disposé le câble et à travers lequel circule le premier fluide réfrigérant lors du fonctionnement de l'arrangement, le premier fluide réfrigérant utilisé étant un fluide réfrigérant liquide ou gazeux refroidi à une température de 39 K ou moins et un deuxième cryostat (K2), destiné à l'acheminement d'un deuxième fluide réfrigérant, étant façonné autour du premier cryostat (K1) de manière coaxiale et espacé de celui-ci, lequel se compose lui aussi de deux tubes (13, 14) en métal disposés de manière coaxiale et espacés l'un de l'autre qui englobent une isolation thermique (15) entre eux et à travers lequel, pendant le fonctionnement de l'arrangement, circule un gaz liquéfié ayant une température inférieure ou égale à 112 K, **caractérisé en ce**
- **que** le matériau supraconducteur utilisé est du diborure de magnésium et
- **qu'**une isolation (16) résistante aux hautes tensions est disposée dans l'espace intermédiaire (12) entre le premier cryostat (K1) et le deuxième cryostat (K2), laquelle enveloppe complètement le tube extérieur (10) du premier cryostat (K1) et repose sur celui-ci et qui, pendant le fonctionnement de l'arrangement, est brassée par le gaz liquéfié circulant à travers l'espace intermédiaire (12) et imprégné par celui-ci.

2. Arrangement selon la revendication 1, **caractérisé en ce que** le premier fluide réfrigérant utilisé est de l'hélium gazeux.
